# EUROPEAN PATENT APPLICATION

(11) **EP 3 264 523 A1**
(43) Date of publication of application: **03.01.2018**
(21) Application number: 15883097.6
(22) Date of filing: 25.12.2015
(51) Int. Cl.: H01Q 1/18, F16F 15/02

(54) **SPACE STABILIZING APPARATUS AND SPACE STABILIZING METHOD**

(30) Priority: 24.02.2015 JP 2015033903
(71) Applicant: NEC Corporation, Tokyo 108-8001 (JP)
(72) Inventor: AOKI, Kazuhiko, Tokyo 108-8001 (JP)
(74) Representative: Vossius & Partner Patentanwälte Rechtsanwälte mbB
(86) International application number: PCT/JP2015/006476
(87) International publication number: WO 2016/135797

(57) **Abstract**

A spatial stabilization apparatus (10) according to the present disclosure includes a vibration suppression mechanism unit (12) configured to suppress vibrations occurring in an installed apparatus (13) installed in a moving body (11), an attitude angle detection unit (14) configured to detect an attitude angle of the installed apparatus (13), a characteristic change unit (15) configured to change a transfer characteristic of vibrations transferred from the moving body (11) to the installed apparatus (13), and an attitude correction unit (16) configured to control the vibration suppression mechanism unit (12) based on the changed transfer characteristic so that the detected attitude angle is corrected. In this way, vibrations can be effectively suppressed.

## Description

### Technical Field

The present disclosure relates to a spatial stabilization apparatus and a spatial stabilization method, and in particular to a spatial stabilization apparatus including a vibration suppression mechanism for preventing propagation of trembling and/or vibrations and a spatial stabilization method.

### Background Art

A spatial stabilization apparatus is an apparatus for stabilizing a pointing direction of a payload (an installed apparatus) such as a sensor, a camera, a communication antenna installed in a moving body such as an airplane, a vehicle, a ship, and an artificial satellite with respect to an inertial space even under a condition in which the pointing direction of the payload is affected by trembling and/or vibrations of the moving body. As a technique for improving the performance of such a spatial stabilization apparatus, a method in which a vibration suppression mechanism for preventing trembling and/or vibrations from propagating from an airframe is incorporated in a pointing mechanism for controlling the pointing direction of a payload has been known. For example, related techniques are disclosed in Patent Literature 1 to 6, etc. Note that trembling may be included in vibrations and vibrations may be included in trembling.

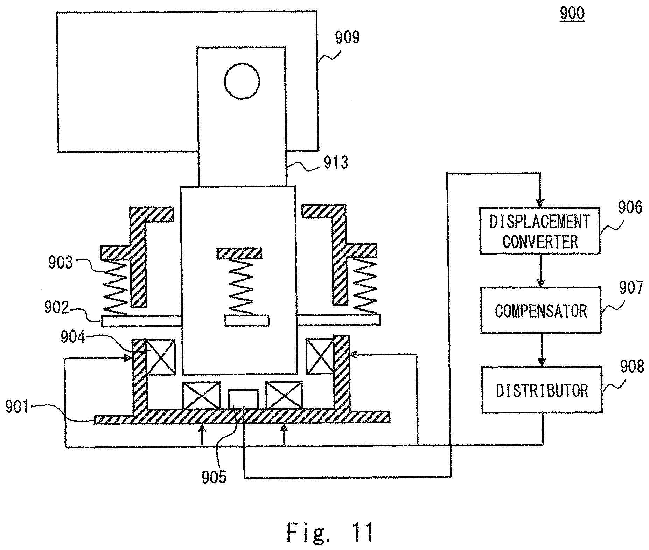

Fig. 11 shows a configuration of a related-art spatial stabilization apparatus (a vibration control mechanism for a pointing control apparatus) 900 disclosed in Patent Literature 1. As shown in Fig. 11, the related-art spatial stabilization apparatus 900 includes a vibration suppression unit 902 on which a pointing control apparatus 913 for controlling a direction of an installed apparatus 909 such as an antenna is placed and which is coupled to a fixed part 901 in such a manner that it can oscillate through a coil spring 903, a plurality of noncontact-type actuators 904 which controls a position or an angle of the vibration suppression unit 902 with respect to the fixed part 901, and a plurality of noncontact-type sensors 905 which measure a displacement, a speed, or an acceleration of the vibration suppression unit 902 with respect to the fixed part 901. Further, the spatial stabilization apparatus 900 includes a displacement converter 906 which is implemented by using a digital signal processor (a DSP) and which performs a coordinate-transformation of a signal from each of the noncontact-type sensors 905 into a six-axis displacement, a compensator 907 which calculates six-axis control amounts from the coordinate-transformed six-axis displacements, and a distributer 908 which distributes the calculated six-axis control amounts to the respective noncontact-type actuators 904, in which the position or the angle of the vibration suppression unit 902 with respect to the fixed part 901 is controlled.

### Citation List

### Patent Literature

Patent Literature 1: Japanese Unexamined Patent Application Publication No. H10-132018
Patent Literature 2: Japanese Unexamined Patent Application Publication No. 2009-19674
Patent Literature 3: Japanese Unexamined Patent Application Publication No. 2000-46977
Patent Literature 4: Japanese Unexamined Patent Application Publication No. H06-105189
Patent Literature 5: Japanese Unexamined Patent Application Publication No. H11-308604
Patent Literature 6: Japanese Unexamined Patent Application Publication No. 2004-205411

### Summary of Invention

### Technical Problem

The inventor of the present disclosure has found that there are cases in which vibrations cannot be sufficiently suppressed by the related technique such as the technique disclosed in Patent Literature 1. Specifically, when an installed apparatus is installed in a moving body, vibrations of the moving body are transferred to the installed apparatus and hence the installed apparatus vibrates. Depending on the frequency of the vibrations, the vibrations could lead to large shaking due to a resonance or the like. Therefore, it is necessary to suppress the vibrations transferred from the moving body as much as possible.

However, in the related technique, a predetermined transfer characteristic including a resonance frequency is used. Therefore, there is a problem that, depending on the frequency of occurring vibrations, there are cases in which the vibrations cannot be effectively suppressed.

In view of the above-described problem, an object of the present disclosure is to provide a spatial stabilization apparatus and a spatial stabilization method capable of effectively suppressing vibrations.

### Solution to Problem

A spatial stabilization apparatus according to the present disclosure includes: a vibration suppression mechanism unit configured to suppress vibrations occurring in an installed apparatus installed in a moving body; an attitude angle detection unit configured to detect an attitude angle of the installed apparatus; a characteristic change unit configured to change a transfer characteristic of vibrations transferred from the moving body to the installed apparatus; and an attitude correction unit configured to control the vibration suppression mechanism unit based on the changed transfer characteristic so that the detected attitude angle is corrected.

A spatial stabilization method according to the present disclosure is a spatial stabilization method for controlling a vibration suppression mechanism unit configured to suppress vibrations occurring in an installed apparatus installed in a moving body, including: detecting an attitude angle of the installed apparatus; changing a transfer characteristic of vibrations transferred from the moving body to the installed apparatus; and controlling the vibration suppression mechanism unit based on the changed transfer characteristic so that the detected attitude angle is corrected.

### Advantageous Effects of Invention

According to the present disclosure, it is possible to provide a spatial stabilization apparatus and a spatial stabilization method capable of effectively suppressing vibrations.

### Brief Description of Drawings

Fig. 1 is a configuration diagram showing an outline of a spatial stabilization apparatus according to an embodiment;
Fig. 2 is a schematic diagram schematically showing a moving body according to a first embodiment;
Fig. 3 is a configuration diagram showing a block configuration of a radar apparatus according to the first embodiment;
Fig. 4 is a configuration diagram showing a configuration of a spatial stabilization apparatus according to the first embodiment;
Fig. 5 is a configuration diagram showing a block configuration of a control unit according to the first embodiment;
Fig. 6 is a flowchart showing an operation of the spatial stabilization apparatus according to the first embodiment;
Fig. 7 is a graph showing a vibration characteristic of the spatial stabilization apparatus according to the first embodiment;
Fig. 8 is a configuration diagram showing a configuration of a spatial stabilization apparatus according to a second embodiment;
Fig. 9 is a graph showing a filter characteristic of the spatial stabilization apparatus according to the second embodiment;
Fig. 10A is a waveform diagram showing an example of a signal of the spatial stabilization apparatus according to the second embodiment;
Fig. 10B is a waveform diagram showing an example of a signal of the spatial stabilization apparatus according to the second embodiment; and
Fig. 11 is a Cited Document diagram showing a configuration of a spatial stabilization apparatus in related art.

### Description of Embodiments

### (Outline of Embodiment)

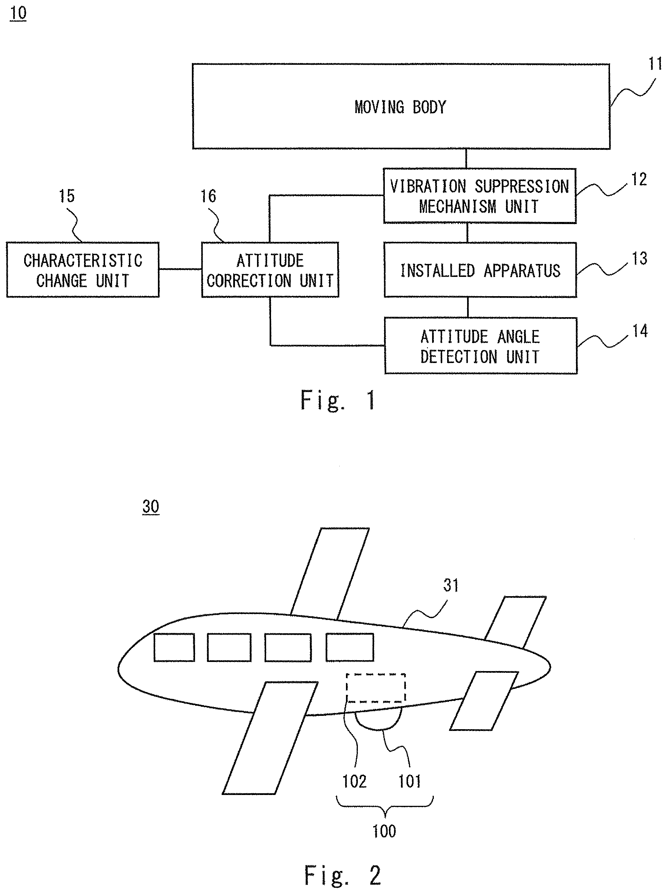

Fig. 1 shows an example of an outline of a spatial stabilization apparatus 10 according to this embodiment. As shown in Fig. 1, the spatial stabilization apparatus 10 includes an installed apparatus 13 installed in a moving body 11, a vibration suppression mechanism unit 12 that suppresses vibrations occurring in the installed apparatus 13, and an attitude angle detection unit 14 that detects an attitude angle of the installed apparatus 13. The spatial stabilization apparatus 10 further includes a characteristic change unit 15 that changes a transfer characteristic of vibrations transferred from the moving body 11 to the installed apparatus 13, and an attitude correction unit 16 that controls the vibration suppression mechanism unit 12 based on the changed transfer characteristic so that the detected attitude angle is corrected.

By changing the transfer characteristic of vibrations and controlling the vibration suppression mechanism unit as described above, it is possible to cope with various types of vibrations and thereby effectively suppress vibrations.

### (First Embodiment)

A first embodiment is explained hereinafter with reference to the drawings. In this embodiment, an example in which in a moving body with a radar apparatus installed therein, vibration suppression control for an antenna of the radar apparatus is performed is explained.

Fig. 2 schematically shows a moving body 30 according to this embodiment. The moving body 30 according to this embodiment is an airplane, a vehicle, a ship, an artificial satellite, or the like. For example, the moving body 30 is a small airplane or a helicopter. The moving body 30 includes a radar apparatus 100 installed therein, and observes a state of the earth's surface or the like while traveling. As an example, the radar apparatus 100 may be an SAR (Synthetic Aperture Radar). The SAR reproduces an observation image from data (complex data) on an amplitude and a phase of a received wave obtained through an antenna based on a position/attitude of the antenna (i.e., the moving body) and thereby reads the state of the earth's surface. Note that since the SAR is used, it is necessary to suppress trembling and/or vibrations, in particular, trembling and/or vibrations of the antenna. Note that the radar apparatus 100 is not limited to the SAR and may be other radars such as a search radar.

The radar apparatus 100 includes, as main components, an antenna unit 101 including an antenna, and a signal processing unit 102 that performs signal processing for a radio wave transmitted/received by the antenna. For example, the antenna unit 101 is disposed in a lower part of an airframe 31 of the moving body 30 and emits a radio wave from the antenna toward the earth's surface located below the airframe 31. The signal processing unit 102 is disposed inside the airframe 31 of the moving body 30 and displays an observation image observed through the antenna in real time.

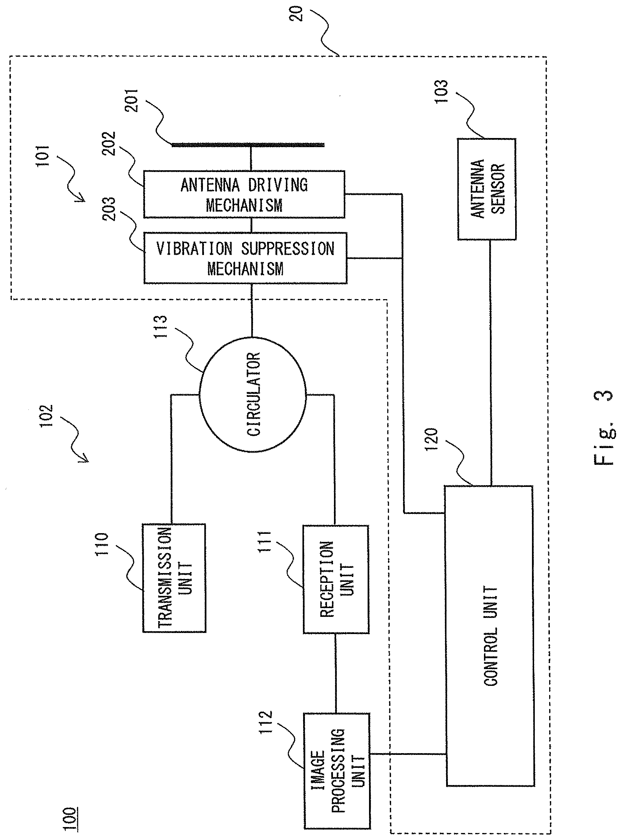

Fig. 3 shows functional blocks of the radar apparatus 100 according to this embodiment. As shown in Fig. 3, the radar apparatus 100 according to this embodiment includes a transmission unit 110, a reception unit 111, an image processing unit 112, a circulator 113, a control unit 120, an antenna 201, an antenna driving mechanism 202, a vibration suppression mechanism 203, and an antenna sensor 103. For example, the antenna unit 101 may include the antenna 201, the antenna driving mechanism 202, the vibration suppression mechanism 203, and the antenna sensor 103. Further, the signal processing unit 102 may include the transmission unit 110, the reception unit 111, the image processing unit 112, the circulator 113, and the control unit 120.

The transmission unit 110 generates a transmission signal for carrying out an observation by using an SAR. The circulator 113 transmits the transmission signal generated by the transmission unit 110 from the antenna 201 and outputs a reception signal received by the antenna 201 to the reception unit 111. The antenna driving mechanism 202 drives the antenna 201 so that the antenna 201 has an optimal direction and an optimal position according to control by the control unit 120. The antenna 201 transmits a transmission wave (i.e., a transmission signal) to an object to be observed and receives a reception wave (i.e., a reception signal) reflected on the object to be observed. The vibration suppression mechanism 203 suppresses trembling and/or vibrations occurring in the antenna 201 according to control by the control unit 120.

The antenna sensor 103 detects an amount of displacement of the antenna 201, which has been displaced according to the driving of the antenna driving mechanism 202, and detects trembling and/or vibrations of the antenna 201. The antenna sensor 103 is an attitude angle sensor that detects an attitude angle of the antenna 201. Alternatively, the antenna sensor 103 may be a GPS (Global Positioning System), a speed sensor, an acceleration sensor, a gyroscopic sensor, a resolver, a displacement sensor, a rate sensor, or the like.

The reception unit 111 performs signal processing for the reception signal received by the antenna 201 and thereby generates a signal that the image processing unit 112 can process. The image processing unit 112 performs image processing for the reception signal processed by the reception unit 111, detects an object to be observed, generates an observation image, and displays the generated observation image.

The control unit 120, which is a control unit that controls each unit of the radar apparatus, controls the antenna driving mechanism 202, the vibration suppression mechanism 203, and so on based on the detection result of the antenna sensor 103 and the observation result of the image processing unit 112. The control unit 120 is an antenna driving control unit that controls the driving of the antenna driving mechanism 202, and also serves as a vibration suppression control unit that controls a vibration suppression operation performed by the vibration suppression mechanism 203.

For example, in the case of a spotlight mode in which a specific object to be observed is observed, the control unit 120 controls the antenna driving mechanism 202 so that a radio wave is emitted from a flight path toward the object to be observed all the time. Further, in the case of a strip-map mode in which an area along a flight path is observed, the control unit 120 controls the antenna driving mechanism 202 so that a radio wave is emitted to the flight path at a specific angle. In this embodiment, the control unit 120 changes a transfer characteristic including a resonance frequency of vibrations and controls the vibration suppression mechanism 203 based on the changed transfer characteristic.

A spatial stabilization apparatus 20 according to this embodiment is an apparatus that stabilizes the attitude of the antenna 201 against trembling and vibrations of the moving body 30, and includes, for example, the antenna 201, the antenna driving mechanism 202, the vibration suppression mechanism 203, the antenna sensor 103, and the control unit 120.

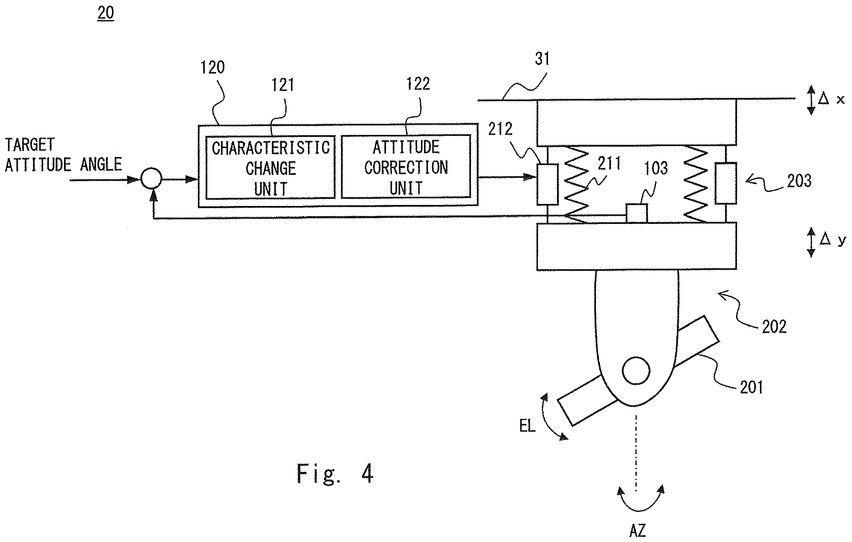

Fig. 4 shows a configuration example of the spatial stabilization apparatus 20 according to this embodiment. As shown in Fig. 4, the antenna driving mechanism 202 is a bi-axial gimbal mechanism for rotationally driving the antenna 201 around two axes. The antenna driving mechanism 202 rotationally drives the antenna 201 around an EL (elevation) axis and an AZ (azimuth) axis according to control by the control unit 120. The AZ axis is perpendicular to the trajectory of the moving body 30 and the EL axis is perpendicular to the AZ axis. For example, the antenna sensor 103 is disposed on the bottom (in a base part) of the antenna driving mechanism 202 and detects the attitudes of the antenna 201 and the antenna driving mechanism 202. The antenna sensor 103 may be directly mounted on the antenna 201.

The vibration suppression mechanism 203 is disposed between the airframe 31 and an assembled unit of the antenna driving mechanism 202 and the antenna 201, and supports the antenna driving mechanism 202 and the antenna 201. When the airframe 31 vibrates (Δx), the vibrations are transferred and hence the antenna driving mechanism 202 and the antenna 201 vibrate (Δy). The vibration suppression mechanism 203 suppresses the vibrations (Δy) that occur in the antenna driving mechanism 202 and the antenna 201 according to the transfer of the vibrations (Δx) of the airframe 31.

The vibration suppression mechanism 203 is an active vibration suppression apparatus and includes a vibration suppression spring 211 and a vibration suppression actuator 212. One end of the vibration suppression spring 211 is fixed to the airframe 31 and the other end is fixed to the antenna driving mechanism 202 (and the antenna 201). For example, the bottom of the antenna driving mechanism 202 has a circular shape in a plan view and a plurality of vibration suppression springs 211 are arranged near the outer circumference of the bottom of the antenna driving mechanism 202 so that the antenna driving mechanism 202 is supported in a well-balanced manner. The vibration suppression springs 211 suppress vibrations that are transferred from the airframe 31 to the antenna driving mechanism 202 and the antenna 201 by elasticity corresponding to their spring constant.

Similarly to the vibration suppression spring 211, one end of the vibration suppression actuator 212 is fixed to the airframe 31 and the other end is fixed to the antenna driving mechanism 202 (and the antenna 201). For example, a plurality of vibration suppression actuators 212 are arranged near the outer circumference of the bottom of the antenna driving mechanism 202 so that they correspond to the plurality of vibration suppression springs 211. The vibration suppression actuators 212 are driven according to control of the control unit 120 and generate a vibration suppression force for suppressing vibrations of the antenna 201. The vibration suppression force is a reactive force that acts in an opposite direction to the direction of the vibration transferred from the airframe 31 to the antenna 201.

The control unit 120 includes a characteristic change unit 121 and an attitude correction unit 122. Note that other configurations may be used, provided that a vibration suppression operation (a spatial stabilization method) according to this embodiment can be realized. The characteristic change unit 121 changes a characteristic (a transfer characteristic) of vibrations that transferred from the airframe 31 to the antenna 201 and hence occur in the antenna 201. In this embodiment, the characteristic change unit 121 controls the driving of the vibration suppression actuator 212 so that the resonance frequency and/or the peak value of vibrations are changed.

The attitude correction unit 122 controls the driving of the vibration suppression actuator 212 so that vibrations of the antenna 201 detected by the antenna sensor 103 are corrected by the changed characteristic (the transfer characteristic) of the vibrations. For example, the attitude correction unit 122 drives the vibration suppression actuator 212 according to a signal (a value) that is obtained by adding a detection result of the antenna sensor 103 to a target attitude angle of the antenna 201.

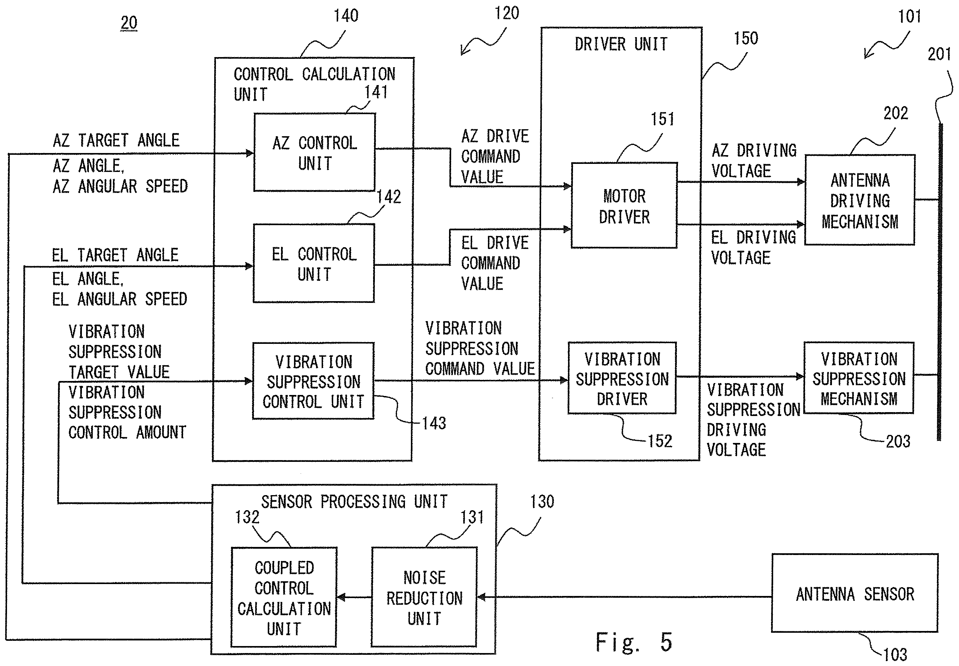

Fig. 5 shows a more specific configuration example of the control unit 120 included in the spatial stabilization apparatus 20 according to this embodiment. As shown in Fig. 5, the control unit 120 includes, for example, a sensor processing unit 130, a control calculation unit 140, and a driver unit 150. Note that the sensor processing unit 130, the control calculation unit 140, and the driver unit 150 may be configured as one block or may be divided into an arbitrary number of blocks.

It can also be considered that the sensor processing unit 130 and the control calculation unit 140 constitute a control unit that generates a driving signal(s) (a drive command value(s)) for driving the antenna driving mechanism 202 and the vibration suppression mechanism 203.

The sensor processing unit 130 processes the detection signal detected by the antenna sensor 103. For example, the sensor processing unit 130 includes a noise reduction unit 131 and a coupled control calculation unit 132. The noise reduction unit 131 removes noises from the detection signal detected by the antenna sensor 103. For example, the noise reduction unit 131 is a low-pass filter or the like.

The coupled control calculation unit 132 performs a coordinate conversion and/or a target value calculation necessary for driving the antenna driving mechanism 202 and the vibration suppression mechanism 203 based on the detection signal of the antenna sensor 103. The target value calculation is preferably performed so that the antenna driving mechanism 202 and the vibration suppression mechanism 203 are both controlled in a coupled manner (a corresponding manner), rather than making them operate independently of each other. In particular, for the vibration suppression control, a target value is generated while incorporating the attitude of the bi-axial gimbal (the attitude in the AZ and EL directions) into the calculation.

The coupled control calculation unit 132 determines the target value based on an observation mode, an attitude and an amount of movement of the airframe, an attitude and an amount of displacement of the antenna, and so on. The coupled control calculation unit 132 generates an AZ (azimuth) target angle, an AZ angle, and an AZ angular speed as AZ control parameters, generates an EL (elevation) target angle, an EL angle, and an EL angular speed as EL control parameters, and generates a vibration suppression target value and a vibration suppression control amount as vibration suppression control parameters. For example, it can be considered that the output of the coupled control calculation unit 132 corresponds to a signal (a value), shown in Fig. 4, that is obtained by combining the target attitude angle and the antenna sensor 103.

The control calculation unit 140 performs control by using PID (Proportional Integral Derivative) controller, a phase lead/delay controller, an optimal controller, and so on so that detected values follow the respective target values. The control calculation unit 140 includes an AZ control unit 141, an EL control unit 142, and a vibration suppression control unit 143.

The AZ (azimuth) control unit 141 generates an AZ drive command value for driving the antenna 201 in an azimuth direction based on the input AZ target angle, the AZ angle, and the AZ angular speed so that the antenna 201 moves to the AZ target angle. The EL (elevation) control unit 142 generates an EL drive command value for driving the antenna 201 in an elevation direction based on the input EL target angle, the EL angle, and the EL angular speed so that the antenna 201 moves to the EL target angle.

The vibration suppression control unit 143 generates a vibration suppression command value for performing vibration suppression driving of the antenna 201 based on the input vibration suppression target value and the vibration suppression control amount so that the antenna 201 moves to the vibration suppression target value. For example, it can be considered that the vibration suppression control unit 143 corresponds to the characteristic change unit 121 and the attitude correction unit 122 shown in Fig. 4.

The driver unit 150 generates a driving signal for driving the antenna driving mechanism 202 and the vibration suppression mechanism 203. The driver unit 150 includes a motor driver 151 and a vibration suppression driver 152. The motor driver 151 is a drive unit for driving the antenna driving mechanism 202.

The motor driver 151 generates an AZ driving voltage based on the input AZ drive command value and supplies the generated AZ driving voltage to the antenna driving mechanism 202 (a motor for azimuth). The motor driver 151 generates an EL driving voltage based on the input EL drive command value and supplies the generated EL driving voltage to the antenna driving mechanism 202 (a motor for elevation).

The vibration suppression driver 152 is a drive unit for driving the vibration suppression mechanism 203. The vibration suppression driver 152 generates a vibration suppression driving voltage for driving the antenna 201 based on the input vibration suppression command value and supplies the generated vibration suppression driving voltage to the vibration suppression actuator 212 of the vibration suppression mechanism 203.

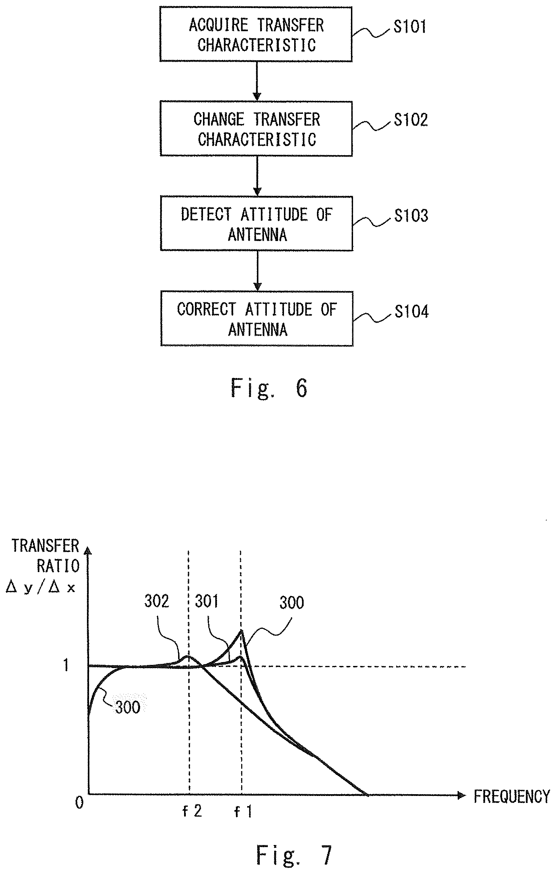

Next, a vibration suppression operation (a spatial stabilization method) according to this embodiment is explained with reference to Figs. 6 and 7. Note that the operation explained below is explained on the assumption that the operation is mainly performed by the characteristic change unit 121 and the attitude correction unit 122. However, the operation may be implemented by an arbitrary configuration in the control unit 120.

As shown in Fig. 6, the characteristic change unit 121 of the control unit 120 acquires a transfer characteristic (S101) and changes the acquired transfer characteristic (S102).

For example, the characteristic change unit 121 acquires a transfer characteristic 300 as shown in Fig. 7. The transfer characteristic indicates transfer ratio Δy/Δx of vibrations versus frequency of the vibrations. The characteristic change unit 121 may acquire information on a characteristic that is stored in advance in a storage unit or the like, or determine a characteristic according to the configuration of the moving body 30, the vibration suppression mechanism 203, the antenna 201, and so on. For example, the transfer characteristic (the transfer function) may be specified based on the spring constant of the vibration suppression spring 211 of the vibration suppression mechanism 203.

The characteristic change unit 121 changes the acquired transfer characteristic 300 to transfer characteristics 301 to 303. The characteristic change unit 121 may change the transfer characteristic to one of the transfer characteristics 301 to 303, or may change the transfer characteristic to a characteristic that is obtained by combining the transfer characteristics 301 to 303. For example, the characteristic change unit 121 changes the characteristic by changing a parameter of the transfer function.

In the example of the transfer characteristic 301, control is performed so that a peak value at a resonance frequency f1 is lowered. In the case of the transfer characteristic 301, it is possible to prevent the largest vibration from occurring. In the example of the transfer characteristic 302, control is performed so that the resonance frequency f1 is lowered to a resonance frequency f2. In the case of the transfer characteristic 302, it is possible to prevent vibrations having frequencies higher than the resonance frequency f2 from occurring by lowering the resonance frequency to the resonance frequency f2. In the example of the transfer characteristic 303, control is performed so that the characteristic in frequencies lower than the resonance frequency f1 is lowered. In the case of the transfer characteristic 303, it is possible to prevent vibrations from occurring at the start of shaking.

Next, the antenna sensor 103 detects the attitude of the antenna (S103) and the attitude correction unit 122 of the control unit 120 corrects the attitude of the antenna (S104). The attitude correction unit 122 performs control so that the attitude of the antenna 201 is corrected by the transfer characteristic that has been changed as shown in Fig. 7.

As described above, in this embodiment, the attitude of the antenna mounted on the moving body is corrected by changing the transfer characteristic for the vibration suppression mechanism for the antenna. In this way, vibrations can be suppressed more effectively compared to the case where the transfer characteristic is fixed. It is possible to considerably suppress vibrations that are transferred from the moving body to the antenna by changing the peak value of the transfer characteristic, the resonance frequency, and/or the transfer ratio in a low-frequency band. Vibrations are different depending on the moving body. For example, while a large airplane vibrates slowly with a long period, a small airplane or a helicopter vibrates quickly with a short period. It is possible to suppress such various types of vibrations by changing the transfer characteristic as explained in this embodiment.

### (Second Embodiment)

A second embodiment is explained hereinafter with reference to the drawings. In this embodiment, an example in which vibration suppression control is performed based on an active attitude change in addition to the vibration suppression control in the first embodiment is explained.

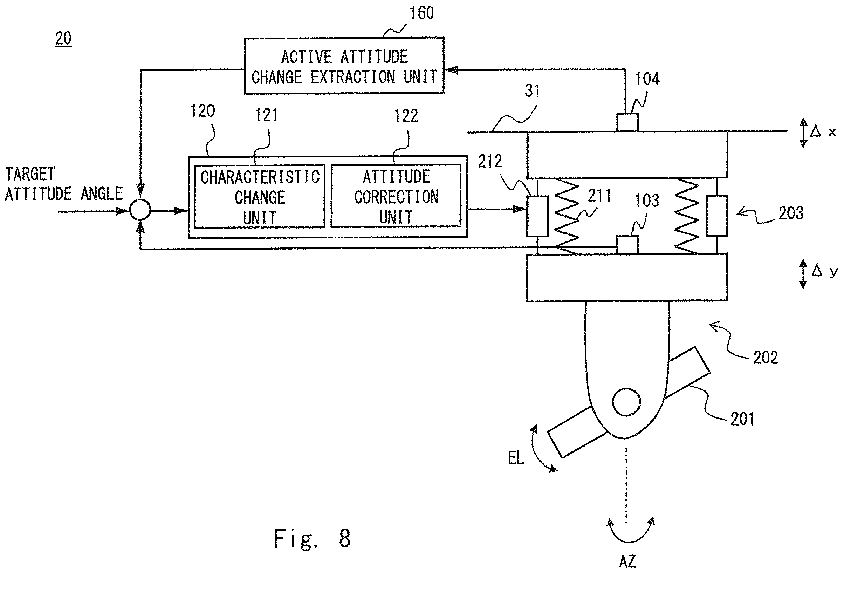

Fig. 8 shows a configuration of a spatial stabilization apparatus 20 according to this embodiment. As shown in Fig. 8, the spatial stabilization apparatus 20 includes an airframe sensor 104 and an active attitude change extraction unit 160 in addition to the configuration of the first embodiment. The rest of the configuration is similar to that of the first embodiment.

The airframe sensor 104 is disposed in the airframe 31 and detects the attitude (displacements in roll, pitch and yaw) of the airframe 31, vibrations thereof, and so on. Similarly to the antenna sensor 103, the airframe sensor 104 is an attitude angle sensor. For example, the airframe sensor 104 may be a GPS, a speed sensor, an acceleration sensor, a gyroscopic sensor, a resolver, a displacement sensor, a rate sensor, or the like.

The active attitude change extraction unit 160 extracts an active attitude change from the attitude angle of the moving body and sets (adds) this extracted active attitude change in the target attitude angle of the vibration suppression mechanism. The active attitude change means a large active change in the attitude of a moving body that occurs when the moving body changes its trajectory such as when it turns in the horizontal direction or in the vertical direction. Further, the active attitude change does not include any change caused by vibrations or trembling. For example, the active attitude change extraction unit 160 can be formed by using a low-pass filter.

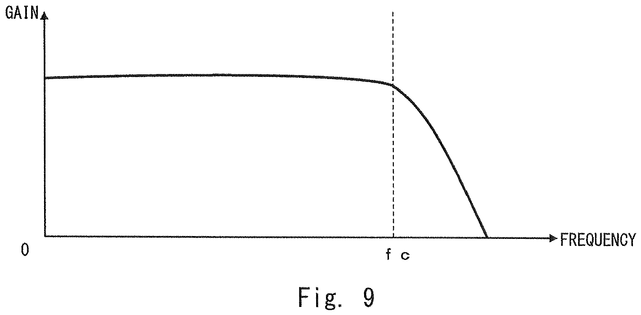

Fig. 9 is an example of a frequency characteristic of a low-pass filter which serves as the active attitude change extraction unit 160. The active attitude change extraction unit 160 cuts off signals having frequencies higher than a cut-off frequency fc and lets signals having frequencies lower than the cut-off frequency fc pass therethrough. In order to remove vibration components of the airframe 31, the cut-off frequency fc is set to a frequency lower than the frequency of vibrations of the airframe 31.

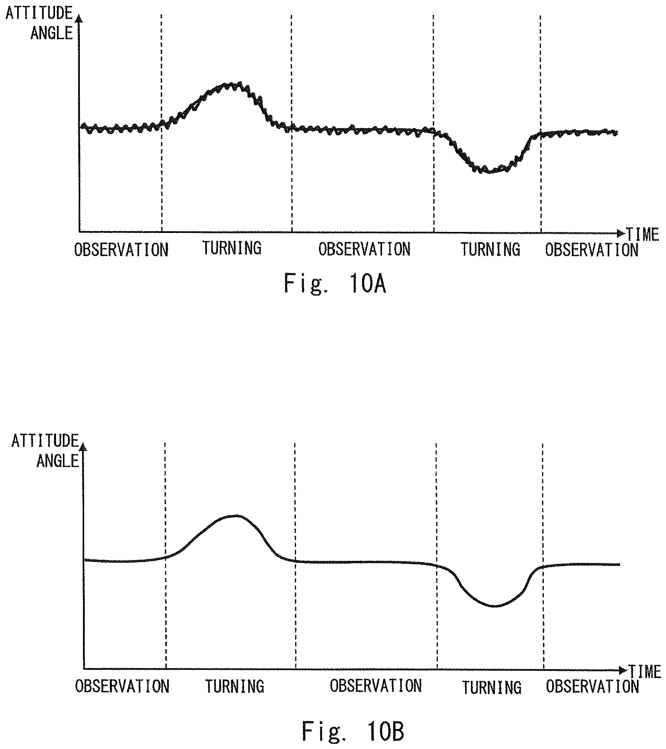

For example, the airframe sensor 104 generates a detection signal shown in Fig. 10A and supplies the generated detection signal to the low-pass filter, which serves as the active attitude change extraction unit 160. As shown in Fig. 10A, the detection signal includes high-frequency vibration components. For example, the moving body repeats an observation by using a radar device and a turning action. The moving body has a constant attitude in the observation and its attitude considerably rolls in the turning action. Then, the active attitude change extraction unit 160 removes high-frequency vibration components from the detection signal by using the low-pass filter and thereby generates an attitude change extraction signal shown in Fig. 10B.

In Fig. 8, the detection signal detected by the antenna sensor 103 and the position change extraction signal extracted by the active attitude change extraction unit 160 are added to the target attitude angle and the resultant signal is input to the control unit 120. The control unit 120 controls the vibration suppression mechanism 203 based on the detection signal detected by the antenna sensor 103 and the position change extraction signal extracted by the active attitude change extraction unit 160.

In the related technique, only the target attitude angle of the vibration suppression mechanism is supplied in advance. Therefore, there is a problem that when the attitude angle of the moving body considerably changes due to the change in the trajectory or the like, the attitude angle of the vibration suppression mechanism becomes unstable and/or the attitude angle gets closer to the limit of the operating range.

Therefore, this embodiment includes means for detecting an attitude angle of a moving body and means for extracting an active attitude change from the attitude angle of the moving body, and the attitude angle extracted by this extraction means is set (added) in the target attitude angle of the vibration suppression mechanism.

In this way, at the time of an active attitude change of the moving body such as a change in the trajectory, the correction is made so as to follow this attitude change. Therefore, it is possible to prevent propagation of trembling/vibrations without making the attitude angle of the vibration suppression mechanism unstable. Therefore, it is possible to stabilize the pointing direction of a payload with respect to an inertial space throughout the entire moving path including a trajectory change.

Note that the present disclosure is not limited to the above-described embodiments and can be modified as appropriate without departing from the spirit and scope of the present disclosure.

For example, in the above-described embodiment, an example in which vibrations of an antenna mounted on a moving body are suppressed is explained. However, vibrations of other installed apparatuses installed in the moving body such as a sensor or a camera may be suppressed.

Each structure in the above-described embodiment may be constructed by software, hardware, or both of them. Further, each structure may be constructed by one hardware device or one software program, or a plurality of hardware devices or a plurality of software programs. Each function (each process) in the embodiment may be implemented by a computer including a CPU, a memory, and so on. For example, a control program for performing a control method according to the embodiment may be stored in a storage device (a storage medium) and each function may be implemented by having a CPU execute the control program stored in the storage device.

Although the present disclosure is explained above with reference to embodiments, the present disclosure is not limited to the above-described embodiments. Various modifications that can be understood by those skilled in the art can be made to the configuration and details of the present disclosure within the scope of the present disclosure.

This application is based upon and claims the benefit of priority from Japanese patent applications No. 2015-033903, filed on February 24, 2015, the disclosure of which is incorporated herein in its entirety by reference.

### Reference Signs List

- 10: SPATIAL STABILIZATION APPARATUS
- 11: MOVING BODY
- 12: VIBRATION SUPPRESSION MECHANISM UNIT
- 13: INSTALLED APPARATUS
- 14: ATTITUDE ANGLE DETECTION UNIT
- 15: CHARACTERISTIC CHANGE UNIT
- 16: ATTITUDE CORRECTION UNIT
- 20: SPATIAL STABILIZATION APPARATUS
- 30: MOVING BODY
- 31: AIRFRAME
- 100: RADAR APPARATUS
- 101: ANTENNA UNIT
- 102: SIGNAL PROCESSING UNIT
- 103: ANTENNA SENSOR
- 104: AIRFRAME SENSOR
- 110: TRANSMISSION UNIT
- 111: RECEPTION UNIT
- 112: IMAGE PROCESSING UNIT
- 113: CIRCULATOR
- 120: CONTROL UNIT
- 121: CHARACTERISTIC CHANGE UNIT
- 122: ATTITUDE CORRECTION UNIT
- 130: SENSOR PROCESSING UNIT
- 131: NOISE REDUCTION UNIT
- 132: COUPLED CONTROL CALCULATION UNIT
- 140: CONTROL CALCULATION UNIT
- 141: AZ (AZIMUTH) CONTROL UNIT
- 142: EL (ELEVATION) CONTROL UNIT
- 143: VIBRATION SUPPRESSION CONTROL UNIT
- 150: DRIVER UNIT
- 151: MOTOR DRIVER
- 152: VIBRATION SUPPRESSION DRIVER
- 160: ACTIVE ATTITUDE CHANGE EXTRACTION UNIT
- 201: ANTENNA
- 202: ANTENNA DRIVING MECHANISM
- 203: VIBRATION SUPPRESSION MECHANISM
- 211: VIBRATION SUPPRESSION SPRING
- 212: VIBRATION SUPPRESSION ACTUATOR

## Claims

1. A spatial stabilization apparatus comprising:
vibration suppression mechanism means for suppressing vibrations occurring in an installed apparatus installed in a moving body;
attitude angle detection means for detecting an attitude angle of the installed apparatus;
characteristic change means for changing a transfer characteristic of vibrations transferred from the moving body to the installed apparatus; and
attitude correction means for controlling the vibration suppression mechanism means based on the changed transfer characteristic so that the detected attitude angle is corrected.

2. The spatial stabilization apparatus according to Claim 1, wherein the characteristic change means changes the transfer characteristic so that a resonance frequency is lowered.

3. The spatial stabilization apparatus according to Claim 1 or 2, wherein the characteristic change means changes the transfer characteristic so that a peak value of vibrations at a resonance frequency is suppressed.

4. The spatial stabilization apparatus according to any one of Claims 1 to 3, wherein the characteristic change means changes the transfer characteristic so that vibrations having frequencies lower than a resonance frequency are suppressed.

5. The spatial stabilization apparatus according to any one of Claims 1 to 4, wherein the characteristic change means changes the transfer characteristic by changing a parameter of a transfer function according to which vibrations are transferred.

6. The spatial stabilization apparatus according to any one of Claims 1 to 5, wherein
the vibration suppression mechanism means comprises a vibration suppression spring and a vibration suppression actuator disposed between the moving body and the installed apparatus, and
the attitude correction means drives the vibration suppression actuator so as to correct the attitude angle.

7. A spatial stabilization method for controlling vibration suppression mechanism means for suppressing vibrations occurring in an installed apparatus installed in a moving body, comprising:
detecting an attitude angle of the installed apparatus;
changing a transfer characteristic of vibrations transferred from the moving body to the installed apparatus; and
controlling the vibration suppression mechanism means based on the changed transfer characteristic so that the detected attitude angle is corrected.

8. The spatial stabilization method according to Claim 7, wherein in the changing of the transfer characteristic, the transfer characteristic is changed so that a resonance frequency is lowered.

9. The spatial stabilization method according to Claim 7 or 8, wherein in the changing of the transfer characteristic, the transfer characteristic is changed so that a peak value of vibrations at a resonance frequency is suppressed.

10. The spatial stabilization method according to any one of Claims 7 to 9, wherein in the changing of the transfer characteristic, the transfer characteristic is changed so that vibrations having frequencies lower than a resonance frequency is suppressed.

11. The spatial stabilization method according to any one of Claims 7 to 10, wherein in the changing of the transfer characteristic, the transfer characteristic is changed by changing a parameter of a transfer function according to which vibrations are transferred.

12. The spatial stabilization method according to any one of Claims 7 to 11, wherein
the vibration suppression mechanism means comprises a vibration suppression spring and a vibration suppression actuator disposed between the moving body and the installed apparatus, and
in the controlling by the vibration suppression mechanism means, the vibration suppression actuator is driven so that the attitude angle is corrected.
